# EUROPEAN PATENT SPECIFICATION

(11) **EP 0 945 666 B1**
(45) Date of publication and mention of the grant of the patent: **22.01.2003**
(21) Application number: 98302172.6
(22) Date of filing: 24.03.1998
(51) Int. Cl.: F16L 59/12

(54) **Method for fabricating a Thermal insulated support**
Herstellungsverfahren eines wärmeisolierten Trägerelementes
Méthode de fabrication d'un support isolé thermiquement

(43) Date of publication of application: 29.09.1999
(73) Proprietor: NICHIAS CORPORATION, Tokyo (JP)
(72) Inventor: Kikuchi, Shiro, Tokyo (JP); Matsuo, Tomonori, Yokohama-shi, Kanagawa-ken (JP); Tanaka, Nobuaki, Yokohama-shi, Kanagawa-ken (JP)
(74) Representative: Allard, Susan Joyce

(56) References cited:
- EP-A- 0 638 756
- DE-A- 3 809 744
- GB-A- 2 315 107
- JP-Y2- 3 017 119
- US-A- 3 980 262

## Description

The present invention relates to improvements in thermal insulated supports used for pipings, tanks, heat exchangers and pumps, for example, when used in conjunction with low temperature liquids, and a method for fabricating the same.

Heretofore, thermal insulated supports for pipes transporting low temperature liquids, such as, for example, LNG, have been widely utilized. In practice, after having secured a thermal insulated supporting member formed in a predetermined shape at a predetermined position on an outer peripheral surface of the piping at the job site, a semicylindrical thermal insulating material, in which there is provided a cut-out opening portion formed in accordance with the shape of the thermal insulated supporting member, is mounted at a location adjacent the thermal insulated supporting member. Next a foam system, such as a rigid polyurethane foam, is dispensed into a gap between the cut-out opening portion of the semicylindrical thermal insulating material and the thermal insulated support. The foam system is subsequently foamed and solidified.

Since the cut-out opening is carried out on site, it is often difficult to execute it correctly and considerable time and effort is required.

Furthermore, dispensing, foaming and filling of the foam system into the gap between the cut-out opening portion of the semicylindrical thermal insulating material and the thermal insulated supporting member, requires a number of additional steps, such as mounting of dispensing molds, dismounting the molds, trimming of foam, and application of a vapor barrier, for example. Additionally, the foam generating reaction of the foam dispensed into the gap between the cut-out opening portion of the semicylindrical thermal insulating material and the thermal insulated supporting member at the application site is exothermic. Accordingly, cooling to an ambient temperature results in stresses and strains being produced in the foam and remaining therein. Consequently, when the piping is cooled, the foam is exposed to a low temperature and hence the remaining stresses and strains are accentuated and may exceed the tolerance limits, which gives rise to serious problems such as cracking and peeling, for example.

In JP-B-3-17119, there is disclosed a thermal insulated support, around which thermal insulating material is molded directly in contact with the periphery of the part, wherein the heat insulating support joint the semicylindrical thermal insulating material. In this construction, stresses and strains also remain between the thermal insulating material and the thermal insulated supporting member as described above, which may lead to cracking and peeling in the heat insulating cylindrical foam when exposed to a low temperature.

An object of the present invention is to provide a method for fabricating thermal insulated support which address the problems associated with the prior art.

Accordingly, the present invention provides a thermal insulated support which method comprises the steps of:
a method for fabricating a thermal insulated support, which method comprises the steps of:
   (i) mounting a thermal insulated supporting member at a predetermined position within moulds;
   (ii) dispensing a thermosetting plastic foam system into a vacant space within the moulds;
   (iii) solidifying the thermosetting plastic foam system to form a thermal insulated member integrated with the thermal insulated supporting member;
characterized in that, prior to step (ii), a preformed thermal insulating member is located on a periphery of the thermal insulated supporting member.
Fig. 1 is a perspective view of a thermal insulated support indicating an embodiment of the present invention;
Fig. 2 is a cross-sectional view along a line indicated by A-A in Fig. 1;
Fig. 3 is a cross-sectional view of a thermal insulated support indicating another embodiment of the present invention;
Fig. 4 is a cross-sectional view of a thermal insulated support indicating still another embodiment of the present invention;
Fig. 5 is a cross-sectional view of another thermal insulated support; and
Fig. 6 is a cross-sectional view of fabrication frames for explaining the method for fabricating the thermal insulated support according to the present invention.

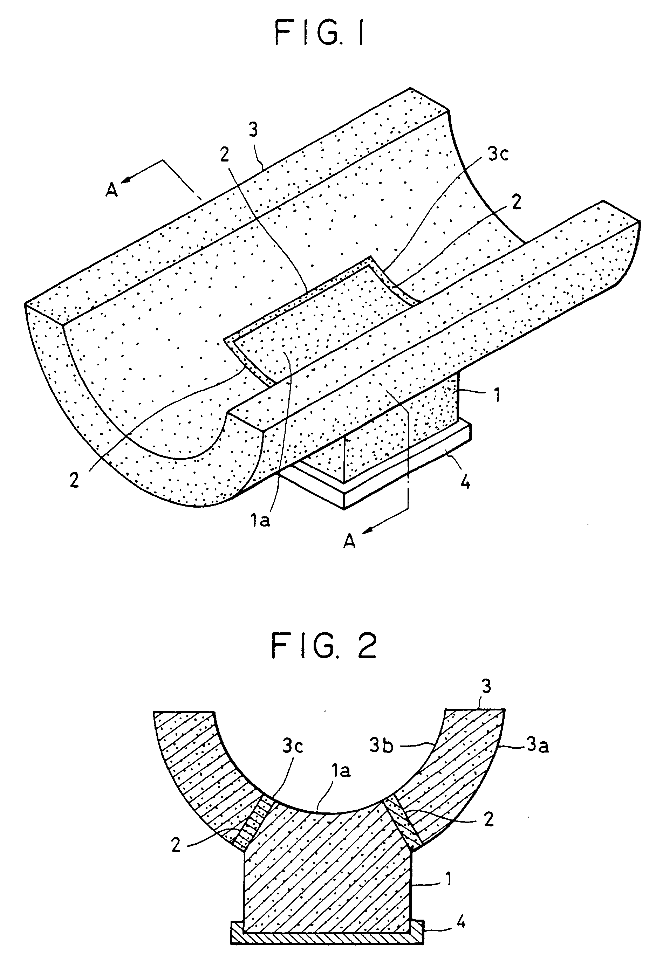

Figs. 1 and 2 show a preferred embodiment of a thermal insulated support according to the present invention for a piping.

The thermal insulated support indicated in the same figures is composed of a thermal insulated supporting member 1 made of a high density synthesized plastic foam material; a preformed thermal insulating member 2 made of a plastic foam adhered on an upper periphery of the thermal insulated supporting member 1; a semicylindrical insulating member 3 formed by foaming and solidifying plastic foam system dispensed into molds so that it is joined to an upper peripheral portion of the thermal insulated supporting member 1, putting the preformed thermal insulating member 2 therebetween; and a base plate 4 joined on a bottom surface of the thermal insulated supporting member 1. The thermal insulated supporting member 1 is mounted on a cut-out opening portion 3c through the preformed thermal insulating member 2 and has an inner peripheral surface 1a, which has a same radius of curvature as the thermal insulating member.

Fig. 1 is a perspective view of the thermal insulated support for a piping according to this embodiment of the present invention; and Fig. 2 is a cross-sectional view along a line indicated by A-A in Fig. 1.

In the same figures, reference numeral 1 is a thermal insulated supporting member for a piping constituting a thermal insulated support for a piping. For this thermal insulated supporting member 1 for a piping, high density plastic foam, woody material, high density calcium silicate, etc. having an excellent thermal insulating properties and a high load bearing strength can be selectively used appropriately according to an object of use.

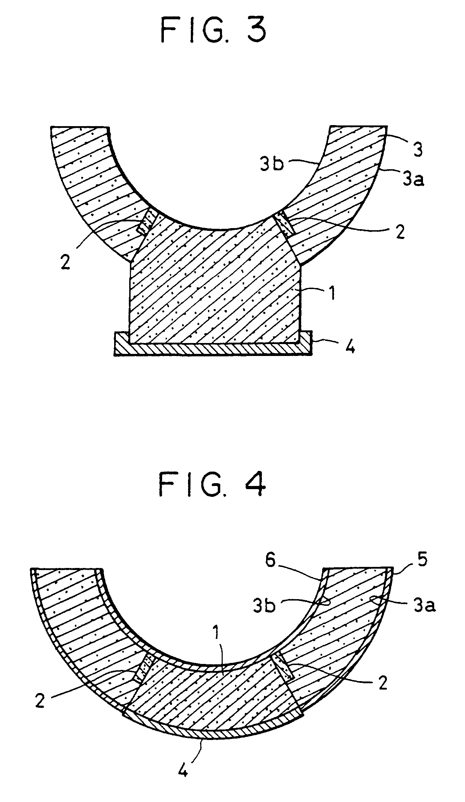

On the upper periphery of the thermal insulated supporting member 1, a preformed thermal insulating member 2 is made of a plastic foam adhered on the upper periphery of thermal insulated supporting member 1. The thickness of this preformed thermal insulating member 2 is not specifically restricted, but a thickness about from 5 to 30mm is suitable. The width thereof may be equal to the width, over which the thermal insulating member is in contact with the thermal insulated supporting member or may be smaller than the width above-mentioned as indicated in Fig. 3.

A semicylindrical thermal insulating member 3 formed by foaming and solidifying plastic foam system dispensed into molds in a state where the preformed thermal insulating member 2 is put therebetween is joined in one body to the upper periphery of the thermal insulated supporting member 1.

For the thermal insulating member 3 thermosetting plastic foam such as polyurethane foam, polyisocyanurate foam, etc. can be used selectively. 4 is a base plate joined on a bottom surface of the thermal insulated supporting member 1.

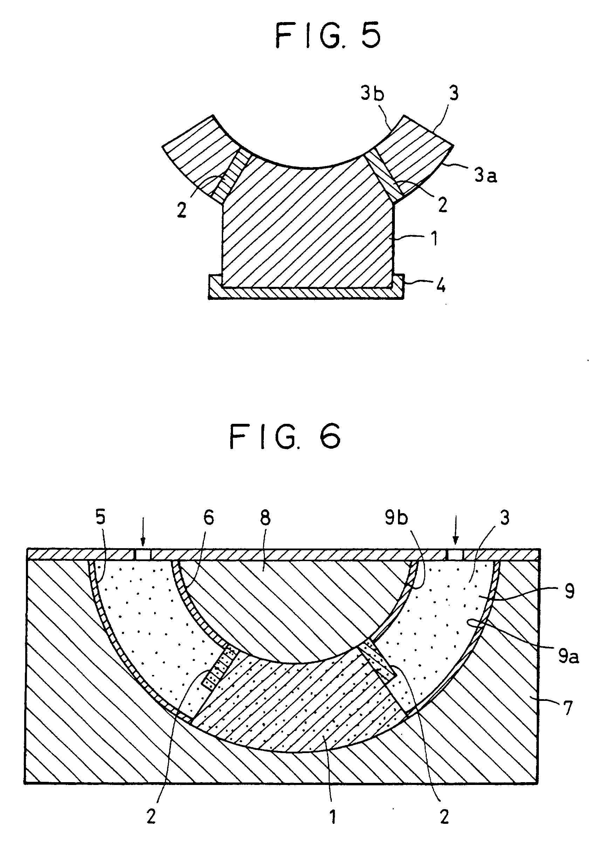

The shape of the thermal insulated supporting member 1 is not restricted to those indicated in Figs. 1 to 3, but any shape can be selectively used appropriately according to an object of use. Fig. 4 indicates an example thereof. Further, the shape of the insulating member is not restricted to the semicylindrical form, but it may be a multi-divided cylindrical form such as a cylindrical form divided into three, and others, as indicated in Fig. 5.

Further, as indicated in Fig. 4, the vapor barrier member 5 may be mounted on the outer periphery 3a of the semicylindrical thermal insulating member 3 and in addition, the reinforcing member 6 may be mounted in one body on the inner peripheral surface 3b. As the vapor barrier, an aluminium foil, composite sheet such as an aluminium foil and a plastic sheet or a glass cloth, etc., and asphalt roofing can be used. As the reinforcing material, a sheet member having a strength higher than the thermosetting foam such as glass cloth, asphalt roofing, asphalt paper, etc. can be used.

Fig. 6 shows an example of the method for fabricating the thermal insulated support for a piping.

By this fabrication method an thermal insulated supporting member 1, on the upper periphery of which the preformed thermal insulating member 2 is adhered, is mounted at a predetermined position within a space demarcated by molds 7 and 8 and a thermosetting plastic foam system is dispensed into a vacant space 9 within the molds to form the thermal insulating member 3 foamed and solidified and at the same time to make the thermal insulating member 3 adhered to the thermal insulated supporting member 1 owing to self adhesivity. In this way the thermal insulated support as indicated in Fig. 4 can be obtained.

Further, at this time, the vapor barrier member and the reinforcing member can be joined with the heat insulating member 3 in one body on the outer peripheral surface and the inner peripheral surface thereof, respectively, by mounting the vapor barrier member 5 on the inner surface 9a of the vacant space 9 within the forming molds and the reinforcing member 6 on the inner surface 9b, and dispensing the foam system into the vacant space to be foamed and solidified.

According to the construction of the thermal insulated support the thermal insulated supporting member 1, since the preformed insulating member 2 adhered to the upper periphery of the thermal insulated supporting member 1, and the thermal insulating member 3 are integrated, and there exists no distortion due to remaining thermal stress at the joining portion of the thermal insulating member 3 to the thermal insulated supporting member 1, no phenomena harmful to the insulation such as cracking, peeling, etc. are produced by temperature variations in practice.

By the fabrication method it is possible to fabricate the thermal insulated support with a high efficiency in a well managed factory.

As explained above, in the thermal insulated support according to the present invention, since the thermal insulated supporting member, preformed thermal insulating member adhered to it and thermal insulating member are integrated so that no remaining stress and strain exist at the joining portion, even if it is exposed to temperature variations in practice, no phenomena harmful to insulation such as cracking, peeling, etc. are produced and an excellent insulating properties can be maintained over a long period.

Further, by the method for fabricating the thermal insulated support according to the present invention, a thermosetting plastic foam system is dispensed into the vacant space within the molds, on which the thermal insulated supporting member is mounted, to form the thermal insulating member by foaming and solidifying it, with which the thermal insulated supporting member can be integrated in one fabrication step, so that an extremely great economical advantage can be obtained as an efficient method for fabricating the thermal insulated support.

## Claims

1. A method for fabricating a thermal insulated support, which method comprises the steps of:
(i) mounting a thermal insulated supporting member (1) at a predetermined position within moulds (7,8);
(ii) dispensing a thermosetting plastic foam system into a vacant space (9) within the moulds (7,8);
(iii) solidifying the thermosetting plastic foam system to form a thermal insulated member (3) integrated with the thermal insulated supporting member (1);
**characterized in that**, prior to step (ii), a preformed thermal insulating member (2) is located on a periphery of the thermal insulated supporting member.

2. A method according to claim 1, wherein, prior to step (ii), a vapour barrier (5) is mounted on a first inner surface (9a) of vacant space (9) within the moulds (7,8) at a position corresponding to an outer peripheral surface (3a) of the thermal insulating member (3) to be formed.

3. A method according to claim 1 or claim 2, wherein, prior to step (ii), a reinforcing member (6) is mounted on a second inner surface (9b) of vacant space (9) within the moulds (7,8) at a position corresponding to an inner peripheral surface (3b) of the thermal insulating member (3) to be formed.

## Patentansprüche

1. Verfahren zum Herstellen eines wärmeisolierten Trägerelementes, wobei das Verfahren die Schritte aufweist:
(i) Befestigen eines wärmeisolierten Trägerelementes (1) an einer vorbestimmten Position innerhalb von Formen (7, 8);
(ii) Leiten eines wärmeaushärtbaren Kunststoffschaumsystems in einen leeren Raum (9) innerhalb der Formen (7, 8);
(iii) Festwerdenlassen des wärmeaushärtbaren Kunststoffschaumsystems, um ein wärmeisoliertes Element (3) einstückig mit dem wärmeisolierten Trägerelement (1) auszubilden;
**dadurch gekennzeichnet, daß** vor dem Schritt (ii) ein vorgeformtes wärmeisolierendes Element (2) am Umfang des wärmeisolierten Trägerelementes angeordnet wird.

2. Verfahren nach Anspruch 1,
wobei vor dem Schritt (ii) an einer ersten Innenfläche (9a) des leeren Raumes (9) innerhalb der Formen (7, 8) an einer Position entsprechend einer Außenumfangsfläche (3a) des zu formenden wärmeisolierenden Elementes (3) eine Dampfsperre (5) montiert wird.

3. Verfahren nach Anspruch 1 oder 2,
wobei vor dem Schritt (ii) an einer zweiten Innenfläche (9b) des freien Raumes (9) innerhalb der Formen (7, 8) an einer Position entsprechend einer Innenumfangsfläche (3b) des zu formenden wärmeisolierenden Elementes (3) ein Verstärkungselement (6) montiert wird.

## Revendications

1. Procédé de fabrication d'un support isolé thermiquement, lequel procédé comprend les étapes consistant à :
(i) monter une pièce de support isolée thermiquement (1) à une position prédéterminée dans des moules (7, 8) ;
(ii) répartir un système de mousses plastiques thermodurcissables dans un espace libre (9) des moules (7, 8) ;
(iii) solidifier le système de mousses plastiques thermodurcissables pour former une pièce isolée thermiquement (3) intégrée avec la pièce support isolée thermiquement (1) ;
**caractérisé en ce que**, avant l'étape (ii), une pièce isolée thermiquement préformée (2) est située sur la périphérie de la pièce support isolée thermiquement.

2. Procédé selon la revendication 1, dans lequel, avant l'étape (ii), un pare vapeur (5) est monté sur une première surface intérieure (9a) d'un espace libre (9) des moules (7, 8) à une position correspondant à une surface périphérique extérieure (3a) de la pièce isolante thermiquement (3) à former.

3. Procédé selon la revendication 1 ou la revendication 2, dans-lequel, avant l'étape (ii), une pièce de renfort (6) est montée sur une seconde surface intérieure (9b) d'un espace libre (9) des moules (7, 8) à une position correspondant à une surface périphérique intérieure (3b) de la pièce isolante thermiquement (3) à former.
